# EUROPÄISCHE PATENTSCHRIFT

(11) **EP 0 650 876 B1**
(45) Veröffentlichungstag und Bekanntmachung des Hinweises auf die Patenterteilung: **04.02.1998**
(21) Anmeldenummer: 93117840.4
(22) Anmeldetag: 03.11.1993
(51) Int. Cl.: B60S 1/38

(54) **Wischblatt**
Wiper blade
Balai d'essuie-glace

(43) Veröffentlichungstag der Anmeldung: 03.05.1995
(73) Patentinhaber: Cooper Industries, Inc., Houston, Texas 77210 (US)
(72) Erfinder: Gilson, Didier, B-6760 Ethe (BE)
(74) Vertreter: Grünecker, Kinkeldey, Stockmair & Schwanhäusser Anwaltssozietät

(56) Entgegenhaltungen:
- WO-A-92/06868
- DE-B- 1 205 855
- US-A- 4 628 565

## Beschreibung

Die Erfindung betrifft ein Wischblatt, insbesondere für Kraftfahrzeuge, mit einem wenigstens einen Bügel aufweisenden Traggestell, einer am Bügel lösbar befestigten Wischleiste und wenigstens einem dem Wischblatt zugeordneten Windleitelement.

Ein solches Wischblatt ist aus der DE-A-3430156 bekannt. Bei dem vorbekannten Wischblatt sind zwei Windleitelemente nebeneinander in Längsrichtung des Wischblattes angeordnet. Jedes Windleitelement deckt teilweise die Wischleiste ab und ist an einem Teil des Traggestelles befestigt. Insbesondere soll durch das Windleitelement ein Zittern und Schwingen einer Wischlippe der Wischleiste verhindert werden, indem das Windleitelement an mehreren Abstützpunkten von oben auf die Wischleiste aufdrückt, so daß die Druckverteilung auf der Wischleiste in deren Längsrichtung vergleichmäßigt ist.

Bei dem vorbekannten Wischblatt ist von Nachteil, daß insbesondere bei relativ hohen Fahrzeuggeschwindigkeiten Wind und auch Wasser im wesentlichen senkrecht auf Wischblatt und Wischleiste einströmen und durch diese Strömung ein relativ hoher Druck auf das Wischblatt bzw. die Wischleiste einwirkt. Dadurch kann eine mit einer Windschutzscheibe in Kontakt stehende Wischlippe der Wischleiste zumindest stellenweise so gekrümmt werden, daß sie von der Windschutzscheibe abhebt und Wind und Wasser zwischen Wischlippe und Windschutzscheibe hindurch strömen. Dadurch verschlechtert sich die Wischqualität des Wischblattes, in dem die Windschutzscheibe stellenweise nicht gereinigt wird.

Der Erfindung liegt daher die Aufgabe zugrunde, ein Wischblatt der eingangs genannten Art dahingehend zu verbessern, daß der durch Wind- und Wasserströmung auf das Wischblatt ausgeübte Druck in konstruktiv einfacher und kostengünstiger einfacher Weise verhindert oder zumindest weitgehend abgebaut wird.

Diese Aufgabe wird bei einem Wischblatt mit dem Merkmal des Oberbegriffs des Anspruchs 1 dadurch gelöst, daß das Windleitelement mit einer Anzahl von Führungskanälen ausgebildet ist, welche jeweils ein vorderseitiges Eintrittsende und ein der Wischleiste zuweisendes, rückseitiges Auslaßende aufweisen, wobei Eintritts- und Austrittsende in Längsrichtung des Wischblattes zueinander versetzt sind.

Auf diese Weise wird die Wind- und/oder Wasserströmung zumindest teilweise entlang der Führungskanäle in Richtung Wischleiste geführt. Da das Austrittsende gegenüber dem Eintrittsende in Längsrichtung des Wischblattes versetzt ist, trifft die Strömung nicht mehr senkrecht, sondern unter einem spitzen Winkel auf die Wischleiste auf. Durch diese Änderung der Strömungsrichtung wird der auf die Wischleiste einwirkende Druck erheblich reduziert. Wind- und/oder Wasserströmung erhalten so eine Bewegungskomponente in Richtung parallel zur Wischleiste. Auf diese Weise bleibt der Kontakt zwischen Windschutzscheibe und Wischlippe bestehen und ein stellenweises Abheben der Wischleiste von der Windschutzscheibe ist ausgeschlossen. Dadurch wird eine gute Wischqualität auch bei einer hohen Fahrzeuggeschwindigkeit gewährleistet.

Das Windleitelement kann in diesem Zusammenhang einem beliebigen Bügel des Traggestells zugeordnet sein. Weist das Traggestell einen Haupt-, wenigstens zwei Zwischen- und/oder wenigstens zwei Krallenbügel auf, ist das Windleitelement bevorzugt wenigstens einem Krallenbügel und/oder Zwischenbügel zugeordnet. Dadurch ist das Windleitelement möglichst direkt benachbart zur Wischleiste angeordnet, so daß es mit einer geringeren Höhe ausgebildet werden kann, als wenn es beispielsweise direkt dem Hauptbügel zugeordnet ist. Die Zuordnung zwischen Krallenbügel und Windleitelement kann beispielsweise durch eine lösbare Befestigung mittels Schrauben oder eines Formschlusses zwischen Krallenbügel und Windleitelement hergestellt werden. Bei einer einfachen Ausführungsform der Erfindung sind Windleitelement und Krallenbügel einteilig hergestellt. Dadurch wird der Zusammenbau des Wischblattes vereinfacht. Sind beispielsweise vier Krallenbügel angeordnet, ist das Windleitelement einem, zwei, drei oder allen Krallenbügeln zugeordnet. Entsprechend sind auch mehrere Windleitelemente einsetzbar.

In analoger Weise können beispielsweise Zwischenbügel und Windleitelement einander zugeordnet und einteilig miteinander hergestellt werden. In diesem Fall weist das Windleitelement eine größere Höhe als im vorstehenden Fall auf, da es sich jeweils mit seinem die Führungskanäle aufweisenden Bereich bis benachbart zur Windschutzscheibe erstreckt.

Um gleichzeitig zur Richtungsablenkung der auf die Wischleiste einströmenden Wind- und/oder Wasserströmung eine auf die Wischleiste einwirkende Andruckkraft zu erhöhen, ist es günstig, wenn das Windleitelement oberhalb der Führungskanäle eine Windleitfläche aufweist, welche sich im wesentlichen parallel zur Wischleiste erstreckt. Die Windleitfläche lenkt insbesondere die auf das Wischblatt gerichtete Windströmung relativ zur Windschutzscheibe nach oben ab. Dabei ergibt sich durch diese Ablenkung der Windströmung eine die Wischleiste in Richtung der Windschutzscheibe andrückende Kraft. Nur eine zwischen unterem Ende der Windleitfläche und Windschutzscheibe hindurchtretende Wind- und/oder Wasserströmung kann weiterhin auf die Wischleiste einwirken. Durch die erfindungsgemäßen Führungskanäle wird ein Großteil dieser verbleibenden Strömung abgelenkt. Durch die kombinierte Wirkung von Windleitfläche und Führungskanälen wird demgemäß die Arbeitsweise des Wischblattes erheblich verbessert.

Die Führungskanäle können einen geschlossenen Querschnitt aufweisen, der beispielsweise viereckig, rund, oval oder dergleichen ist. Zur Vereinfachung der Herstellung der Führungskanäle sind diese auf der der Windleitfläche gegenüberliegenden Seite offen. Das Windleitelement und damit die Führungskanäle sind so angeordnet, daß diese bei einer Schwenkbewegung des Wischblattes zum Reinigen der Windschutzscheibe, bei der die Wischleiste entgegengesetzt zur Bewegungsrichtung umgebogen wird, mit einem geringen Abstand zur Windschutzscheibe angeordnet sind.

Der Führungskanal kann in diesem Zusammenhang einen V-förmigen oder vorzugsweise einen U-förmigen Querschnitt aufweisen. Dabei erstreckt sich der Führungskanal zwischen Eintritts- und zu diesem versetzten Austrittsende, wobei er beispielsweise geradlinig verläuft. Bei einer anderen Ausführungsform der Erfindung kann der Führungskanal in seinem Verlauf eine oder mehrere Knickstellen aufweisen, in denen er seine Richtung ändert, um den Versatz zwischen Eintritts- und Austrittsende zu überbrücken. Strömungstechnisch ist es in diesem Zusammenhang von Vorteil, wenn der Führungskanal gekrümmt verläuft und glatte Begrenzungen aufweist.

Die Ablenkung der Wind- und/oder Wasserströmung kann zu beiden Enden in Längsrichtung des Wischblattes erfolgen. Bei einem Wischblatt, welches an einem freien Ende eines hin- und herbeweglichen Wischarms angelenkt ist, erweist es sich von Vorteil, wenn das Austrittsende gegenüber dem Eintrittsende in Richtung zum vom Wischerarm fortweisenden Ende des Wischblattes versetzt ist. Entsprechend verläuft der Führungskanal in Richtung zu diesem fortweisenden Ende beispielsweise gekrümmt. Dadurch wird ein Ableiten von Wind und/oder Wasser entlang der Wischleiste unterstützt, da der Fahrtwind entlang der Windschutzscheibe im wesentlichen in Richtung eines Fahrzeugdaches strömt und bei den heutigen Fahrzeugen im allgemeinen der Wischerarm am unteren Ende der Windschutzscheibe verschwenkbar gelagert ist.

Die Führungskanäle können als Nuten oder Vertiefungen in einem Vollmaterial ausgebildet sein. Zur Vereinfachung der Herstellung und zur Material- und Kostenersparnis ist es allerdings von Vorteil, wenn der Führungskanal von zwei Seitenwänden begrenzt ist, welche sich zwischen Eintritts- und Austrittsende erstrecken. Diese stehen bevorzugt im wesentlichen senkrecht nach unten von der Windleitfläche ab. Um die Führung und damit die Ablenkung der Wind- und/oder Wasserströmung in diesem Zusammenhang zu verbessern, ist es weiterhin von Vorteil, wenn die Seitenwände mit einer in Richtung zum Austrittsende zunehmenden Höhe ausgebildet sind. Auf diese Weise wird die Strömung in Richtung zur Wischleiste geführt und vollständiger gegenüber der Wischleiste unter einem spitzen Winkel abgelenkt. Außerdem kann auf diese Weise - sich ändernde Höhe - eine Berührung der Windschutzscheibe bei Bewegung des Scheibenwischers vermieden werden.

In diesem Zusammenhang ist es weiterhin von Vorteil, wenn die einen Führungskanal begrenzenden Seitenwände unterschiedliche Krümmungsradien aufweisen. Je nach Ausbildung und Anordnung der Seitenwände kann aufgrund der unterschiedlichen Krümmungsradien der Führungskanal sich in Richtung Austrittsende verengen oder erweitern. Durch eine solche Verengung ergibt sich beispielsweise eine Düsenwirkung, durch die eine Geschwindigkeitskomponente der Wind- und/oder Wasserströmung parallel zum Wischblatt erhöht werden kann. Eine Erweiterung des Führungskanals ist beispielsweise dann zweckmäßig, wenn das Windleitelement nur eine geringere Anzahl von Führungskanälen aufweist. Auf diese Weise wird ein Ansammeln beispielsweise von Wasser vor den Eintrittsenden der Führungskanäle bei einem hohen Wasseraufkommen aufgrund beispielsweise eines starken Regens verhindert.

Die Führungskanäle können in Längsrichtung des Windleitelements direkt nebeneinander angeordnet sein, wobei benachbarte Führungskanäle durch nur eine Seitenwand getrennt sind, deren den jeweiligen Führungskanal begrenzende Seitenflächen unterschiedliche Krümmungsradien aufweisen. Dies ist beispielsweise bei einer einfachen Konstruktion dadurch zu erreichen, daß die Seitenwand in Richtung zum Eintrittsende mit abnehmender Wandstärke ausgebildet ist. Die Seitenwand läuft beispielsweise am Eintrittsende relativ spitz zu, wobei sie am Austrittsende ein demgegenüber verdicktes Ende aufweist.

Bei einer anderen Ausführungsform der Erfindung sind die Seitenwände eines jeden Führungskanals separat ausgebildet und nebeneinander angeordnet Seitenwände benachbarter Führungskanäle sind zumindest auf der Seite der Eintrittsenden durch eine Vorderwand miteinander verbunden. Die Vorderwand kann in diesem Fall einen Teil der Windleitfläche bilden, wodurch diese in Richtung zur Windschutzscheibe verlängert ist und eine bessere Umlenkung der Windströmung nach oben von der Windschutzscheibe weg gewährleistet ist.

Die einzelnen Vorderwände können eben ausgebildet sein, wobei sie im wesentlichen parallel zur Längsrichtung des Windleitelements verlaufen, oder sie können beispielsweise in Richtung zu den Führungskanälen gekrümmt verlaufen. Im ersten Fall wird die Wirkung der Windleitfläche verbessert und im zweiten Fall wird die Zuführung von Wind- und/oder Wasserströmung zu den Führungskanälen verbessert.

In diesem Zusammenhang ist es weiterhin günstig, wenn die Vorderwände beispielsweise über die Führungskanäle und die Seitenwände in Richtung zur Windschutzscheibe vorstehen, wodurch weniger Wind- und/oder Wasserströmung zwischen den Führungskanälen unterhalb der Vorderwand zu der Wischleiste gelangt. Dabei ist es möglich, daß beispielsweise die Vorderwand an ihrem der Windschutzscheibe zuweisenden Ende aus einem ähnlichen Material wie die Wischleiste ausgebildet ist und ebenfalls mit der Windschutzscheibe in Kontakt ist. Bei einer einfachen Ausführungsform sind Vorderwand und Seitenwände aus dem gleichen Material und weisen im Bereich des Eintrittsendes die gleiche Höhe auf.

Um an ihrem dem Austrittsende zugeordneten Ende möglichst nahe zur Windschutzscheibe angeordnet zu sein, ist es bei den Seitenwänden weiterhin günstig, wenn diese an ihrem der offenen Seite des Führungskanals zuweisenden Ende schräg nach unten in Richtung Austrittsende verlaufen.

Um das Wischblatt in der Herstellung zu vereinfachen und leichter auszubilden, sind bevorzugt Krallenbügel und Windleitelement über im wesentlichen horizontal verlaufende Stege im Bereich von Enden des Krallenbügels miteinander verbunden.

Ist die Seitenwand in Richtung zur offenen Seite des Führungskanals mit einer abnehmenden Länge zwischen Eintritts- und Austrittsende ausgebildet, so ist beispielsweise die Herstellung der Windleitelemente vereinfacht, wenn diese durch Spritzguß geformt werden.

Gemäß der Erfindung kann auch nur ein Windleitelement angeordnet sein, das beispielsweise einteilig mit den beiden Krallenbügeln hergestellt ist und sich in Längsrichtung des Wischblattes zumindest über die Länge der Krallenbügel oder beispielsweise über die gesamte Länge der Wischleiste erstreckt. Um die Flexibilität des Wischblattes und dessen Anpassung an eine entsprechende Krümmung der Windschutzscheibe zu verbessern, ist es allerdings im allgemeinen von Vorteil, wenn beispielsweise zwei Windleitelemente vorgesehen sind. Jeweils ein Windleitelement ist dabei einem Krallenbügel zugeordnet und die Windleitelemente sind an ihren aufeinander zuweisenden Enden eng benachbart. Da ein Abheben der Wischleiste insbesondere im mittleren Bereich des Wischblattes bzw. im Bereich der Krallenbügel auftritt, ist es im allgemeinen ausreichend, wenn ein Windleitelement sich in Längsrichtung beidseitig über den Krallenbügel gleich weit hinaus erstreckt und in etwa eine obere Hälfte der Wischleiste abdeckt und sich bis oberhalb des Krallenbügels erstreckt. Auf diese Weise ist sichergestellt, daß einmal durch die Windleitfläche die Windströmung von der Windschutzscheibe nach oben abgelenkt wird und andererseits der besonders gefährdete Bereich des Wischblattes vor einer Einwirkung von Wind- und/oder Wasserströmung durch die Führungskanäle weitestgehend gesichert ist. Durch Integration von Krallenbügel und Windleitelement ergibt sich außerdem der Vorteil, daß die Entfernung zwischen dem unteren Ende des Windleitelements, d.h. den Führungskanälen, und der Windschutzscheibe sehr gering sein kann. Die Krümmung der Windschutzscheibe überträgt sich auf die miteinander gelenkig verbundenen Bügel und damit auf die Wischleiste. In entsprechender Weise wird bei einer solchen Krümmung das Windleitelement durch seine Anordnung am Krallenbügel immer auf Distanz zur Windschutzscheibe gehalten. Die Entfernung zwischen Windleitelement und Windschutzscheibe bleibt folglich im wesentlichen immer gleich. Auf diese Weise kann das Windleitelement relativ nahe an der Windschutzscheibe angeordnet werden, schützt die Wischleiste vor einem durch Wind- und/oder Wasserströmung ausgeübten Druck und verhindert gleichzeitig ein Abheben der Wischleiste von der Windschutzscheibe aufgrund der Windeinwirkung.

Das Wischblatt kann aus den üblichen Materialien hergestellt sein. So sind beispielsweise für die Bügel in bekannter Weise entsprechende Metalle oder Kunststoffe verwendbar und für die Wischleiste entsprechende elastische Kunststoffe.

Im folgenden werden Ausführungsbeispiele der Erfindung anhand einer Zeichnung beigefügten Figuren näher erläutert und beschrieben.

Es zeigen:
- Fig. 1: eine Seitenansicht eines erfindungsgemäßen Wischblattes;
- Fig. 2: eine Draufsicht auf das Wischblatt nach Fig. 1;
- Fig. 3: eine Draufsicht auf eine Ausführungsform eines Krallenbügels mit integriertem Windleitelement;
- Fig. 4: eine Draufsicht von unten auf den Gegenstand nach Fig. 3;
- Fig. 5: eine Vorderansicht des Gegenstands nach Fig. 3;
- Fig. 6: einen Schnitt entlang der Linie VI-VI aus Fig. 3;
- Fig. 7: einen Schnitt entlang der Linie VII-VII aus Fig. 3;
- Fig. 8: einen Schnitt entlang der Linie VIII-VIII aus Fig. 4;
- Fig. 9: eine Draufsicht auf eine weitere Ausführungsform eines Krallenbügels mit integriertem Windleitelement;
- Fig. 10: eine Draufsicht von unten auf den Gegenstand nach Fig. 9;
- Fig. 11: eine Vorderansicht des Gegenstands nach Fig. 9;
- Fig. 12: einen Schnitt entlang der Linie XII-XII aus Fig. 11;
- Fig. 13: einen Schnitt entlang der Linie XIII-XIII aus Fig. 11;
- Fig. 14: einen Schnitt entlang der Linie XIV-XIV aus Fig. 11;
- Fig. 15: eine vergrößerte Darstellung des Details X aus Fig. 10;
und
- Fig. 16: eine Prinzipskizze zur Erläuterung der Wirkungsweise der Erfindung.

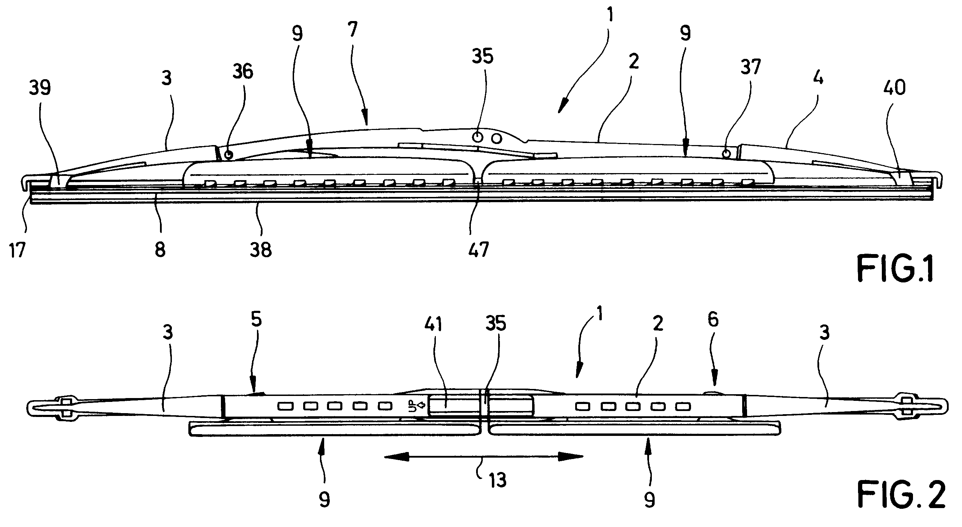

In den Figuren 1 und 2 ist ein erfindungsgemäßes Wischblatt 1 mit einem Ausführungsbeispiel für ein Windleitelement 9 dargestellt. In der Seitenansicht nach Fig. 1 weist das Wischblatt 1 ein Traggestell 7 und eine Wischleiste 8 auf. Das Traggestell 7 besteht aus einem Hauptbügel 2, zwei Zwischenbügeln 4 und zwei von den Windleitelementen 9 verdeckten Krallenbügeln 5 und 6, siehe Fig. 2. Der Hauptbügel 2 ist an seinen Enden über Gelenke 36 und 37 mit den Zwischenbügeln 3 und 4 verbunden. Diese weisen an ihren der Wischleiste 8 zugeordneten Enden Krallen 39 und 40 zur lösbaren Befestigung der Wischleiste 8 auf. An ihren gegenüberliegenden Enden sind die Zwischenbügel 3 und 4 über entsprechende Gelenke mit den Krallenbügeln 5 und 6 verbunden.

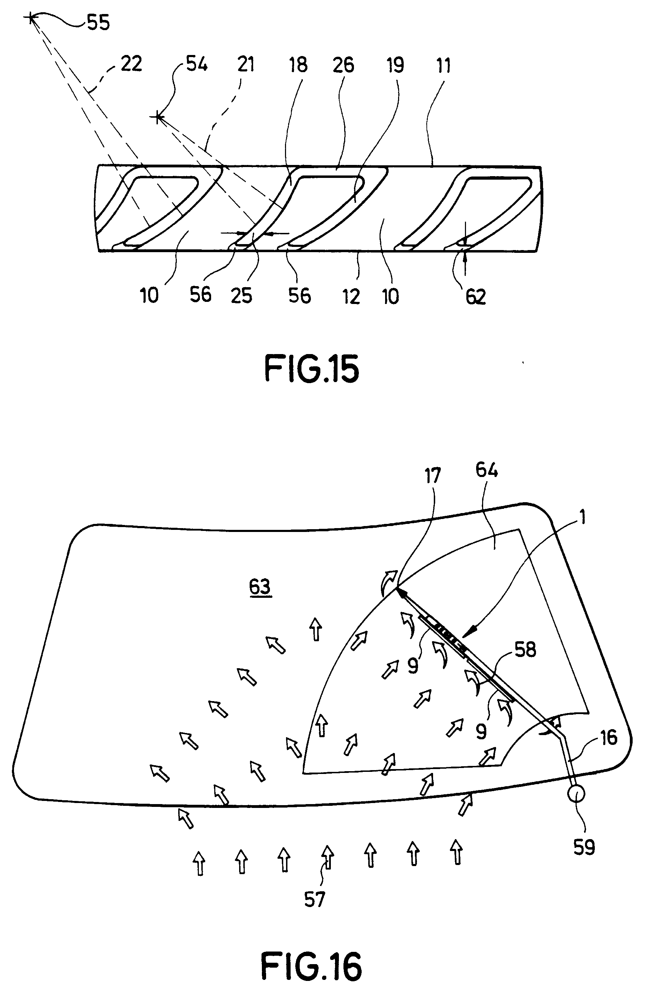

Zur verschwenkbaren Lagerung an einem in Fig. 16 dargestellten Wischerarm weist der Hauptbügel 2 eine Aufnahmeöffnung 41 auf, in der in etwa mittig ein Niet 35 am Hauptbügel 2 gelagert ist.

Die Windleitelemente 9 erstrecken sich von einer Mitte 47 der Wischleiste 8 in etwa unterhalb des Niets 35 beidseitig in Richtung der Zwischenbügel 3 bzw. 4. Die Windleitelemente 9 überdecken in etwa eine obere Hälfte der Wischleiste 8, wobei eine am unteren Ende der Wischleiste 8 ausgebildete Wischlippe 38 frei bleibt. Windleitelemente 9, Wischleiste 8 und Traggestell 7 erstrecken sich im wesentlichen in Längsrichtung 13 des Wischblattes 1.

Das Wischblatt 1 ist nach Fig. 16 so mit dem Wischerarm verbunden, daß ein Ende 17 des Wischblattes 1 vom Wischerarm fortweist.

In den folgenden Figuren sind gleiche Bauteile mit den gleichen Bezugszeichen versehen, so daß einige Bezugszeichen nicht bei jeder Figur erläutert werden. Bezüglich der vorgenannten Bezugszeichen wird auf vorangehende Figuren verwiesen.

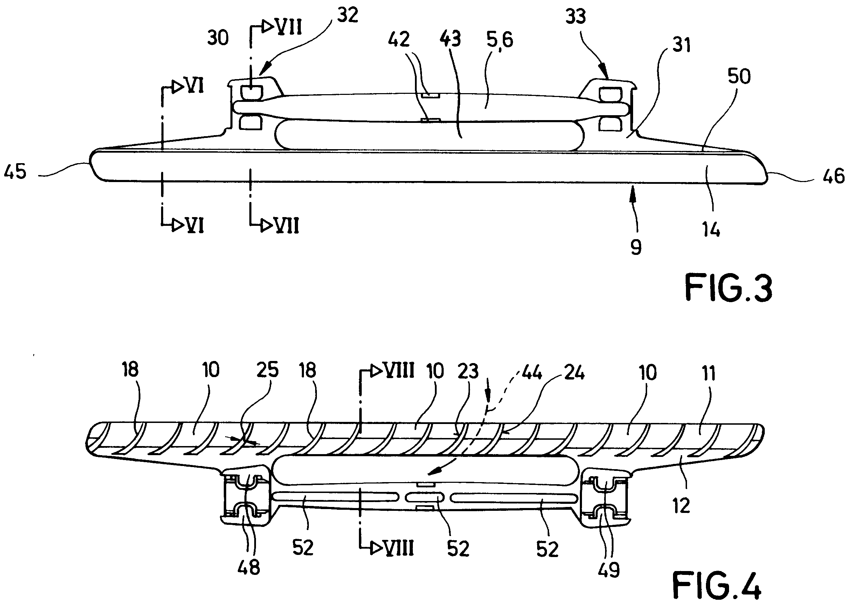

In den Figuren 3 bis 5 sind verschiedene Ansichten eines ersten Ausführungsbeispiels eines Windleitelements 9 dargestellt.

In der Draufsicht nach Fig. 3 sind Krallenbügel 5 bzw. 6 und Windleitelement 9 einteilig hergestellt.

Der Krallenbügel 5 bzw. 6 weist an seinen Enden 32 bzw. 33 Krallen 48 bzw. 49 auf, von denen in bekannter Weise das Wischblatt lösbar gehalten ist. Im Bereich dieser Enden ist das Windleitelement 9 über Stege 30 bzw. 31 mit dem Krallenbügel 5 bzw. 6 verbunden. In etwa mittig zum Krallenbügel ist eine Rasteinrichtung 42 angeordnet, auf die der in Fig. 1 dargestellte Zwischenbügel 3 bzw. 4 mittels entsprechender Krallen von oben auf die Krallenbügel 5 und 6 aufrastbar ist. Zwischen den Stegen 30 und 31 und dem Krallenbügel 5 bzw. 6 und dem Windleitelement 9 ist eine langgestreckte Öffnung 43 zur Materialersparnis gebildet.

Das Windleitelement 9 weist auf seiner Oberseite eine Windleitfläche 14 mit Enden 45 und 46 auf. Die Windleitfläche 14 steigt in Richtung zum Krallenbügel 5 bzw. 6 nach oben an, d.h. erhebt sich aus der Figurenebene nach Fig. 3, und endet in einem oberen Ende 50. Das Ende 45 ist gegenüber dem sich parallel zum Krallenbügel 5 bzw. 6 erstreckende oberen Ende 50 nach innen in Richtung zum Krallenbügel und das Ende 46 nach außen vom Krallenbügel weg gekrümmt.

In der Draufsicht von unten auf Krallenbügel 5 bzw. 6 und Windleitelement 9 nach Fig. 3 sind in Fig. 4 eine Anzahl von Führungskanälen 10 sichtbar. Die Führungskanäle 10 sind jeweils durch eine Seitenwand 18 voneinander getrennt. Wind und/oder Wasser strömt durch die Führungskanäle 10 in Strömungsrichtung 44 in ein Eintrittsende 11 ein und aus einem Austrittsende 12 aus. Die Seitenwände 18 erstrecken sich unterhalb der Windleitfläche 14 und stehen von dieser im wesentlichen senkrecht nach unten ab. Die Seitenwände 18 weisen Seitenflächen 23 und 24 auf, welche mit unterschiedlichem Krümmungsradius ausgebildet sind. Der Krümmungsradius der Seitenfläche 23 und der Krümmungsradius der Seitenfläche 24 können gleich oder unterschiedlich sein. Sind die Krümmungsradien gleich, sind die zugehörigen Krümmungsmittelpunkte so zueinander versetzt, daß die Seitenflächen am Eintrittsende 11 zusammen und am Austrittsende 12 auseinander laufen, so daß eine Wandstärke 25 der Seitenwand 18 vom Eintrittsende 11 zum Austrittsende 12 zunimmt. Bei unterschiedlichen Krümmungsradien sind diese so gewählt, daß die vorstehende Bedingung bezüglich der Wandstärke 25 ebenfalls erfüllt ist.

Durch die Zunahme der Wandstärke 25 vom Eintrittsende 11 in Richtung Austrittsende 12 verengen sich die Führungskanäle 10 in Richtung zum Austrittsende. Durch die Krümmung der Seitenwände 18 verlaufen die Führungskanäle 10 in entsprechender Weise gekrümmt, so daß das Austrittsende 12 gegenüber dem Eintrittsende 11 in Längsrichtung des Krallenbügels 5 bzw. 6 oder in Längsrichtung des Wischblattes zueinander versetzt angeordnet sind. Das Austrittsende 12 ist in diesem Zusammenhang gegenüber dem Eintrittsende 11 in Richtung zum Ende 17 nach Fig. 1 versetzt.

Die Krallenbügel 5 und 6 weisen auf ihrer Unterseite nach Fig. 4 eine Anzahl von nutförmigen Ausnehmungen 52 zur Materialersparnis auf. An den Enden 32 bzw. 33 eines jeden Krallenbügels sind zwei aufeinander zuweisende Krallen 48 bzw. 49 angeordnet. Diese greifen in bekannter Weise in seitliche Nuten der Wischleiste 8 nach Fig. 1 bzw. 2 ein.

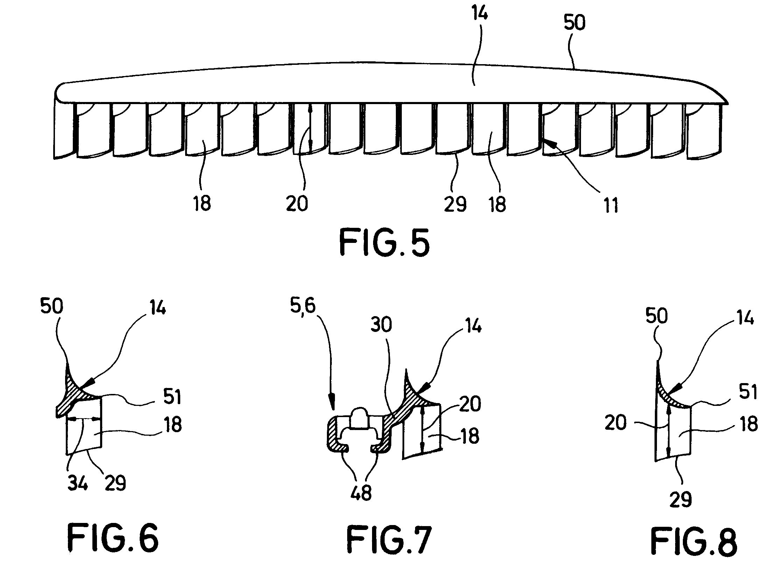

In Fig. 5 ist eine Vorderansicht auf den Gegenstand nach Fig. 3 dargestellt. Unterhalb der Windleitfläche 14 sind eine Vielzahl von blattförmigen, im wesentlichen vertikal nach unten verlaufenden Seitenwänden 18 sichtbar. Diese erstrecken sich über eine Höhe 20 bis zu einem unteren Ende 29. Die Höhe 20 nimmt in Richtung zum Austrittsende 12 zu, wobei das untere Ende 20 im wesentlichen konkav gekrümmt ist.

In den Fig. 6 bis 8 sind verschiedene Schnitte entlang der Linien VI-VI, VII-VII und VIII-VIII durch die Figuren 3 und 4 dargestellt.

Nach Fig. 6 ist die Windleitfläche 14 konkav gekrümmt und erstreckt sich von einem vorderen Ende 51 bis zum oberen Ende 50. Auf ihrer die Seitenwände 18 tragenden Unter- und ihrer dem Krallenbügel 5 bzw. 6 aus Fig. 3 zuweisenden Rückseite ist die Windleitfläche im wesentlichen eben ausgebildet. An ihrem vorderen Ende 51 schließen ihre konkav gekrümmte Oberseite und die den Seitenwänden zuweisende Unterseite einen Winkel zwischen 12 und 25°, vorzugsweise zwischen 16 und 19° ein. Rückseite und Unterseite gehen in einen nach hinten und unten abstehenden Fortsatz über, der nach Fig. 3 einen Teil des Steges 30 bildet. Die Seitenwand 18 erstreckt sich vom vorderen Ende 51 bis über eine Länge 34 und endet in etwa in Verlängerung der Rückseite der Windleitfläche 14 nach unten. An ihrem unteren Ende 29 ist die Seitenwand 18 leicht konkav gekrümmt.

In Fig. 7 ist der Schnitt gleichzeitig durch den Krallenbügel 5 bzw. 6 gelegt. Auf seiner Unterseite sind zwei aufeinander zuweisende Krallen 48 angeordnet. Der in Fig. 6 als Fortsatz von Unterseite und Rückseite der Windleitfläche 14 abstehende Vorsprung, bildet nach Fig. 7 den Steg 30 zur Verbindung mit dem Krallenbügel 5 bzw. 6. Unterhalb der Windleitfläche 14 ist dargestellt, daß die Seitenwand 18 in Richtung zum Krallenbügel 5 bzw. 6 mit zunehmender Höhe 20 ausgebildet ist.

In Fig. 8 ist ein Schnitt entlang der Linie VIII-VIII aus Fig. 4 dargestellt. Zur Vereinfachung ist der Schnitt durch den Krallenbügel 5 bzw. 6 nicht dargestellt. Unterseite und Rückseite der Windleitfläche 14 gehen nach Fig. 8 über einen entsprechend zur Oberseite der Windleitfläche 14 gekrümmten Abschnitt ineinander über. Von diesen und von der im wesentlichen horizontalen Unterseite der Windleitfläche 14 stehen die Seitenwände 18 senkrecht nach unten ab, wobei sich die Seitenwand 18 vom vorderen Ende 51 bis formschlüssig zur im wesentlichen vertikal verlaufenden Rückseite der Windleitfläche erstreckt.

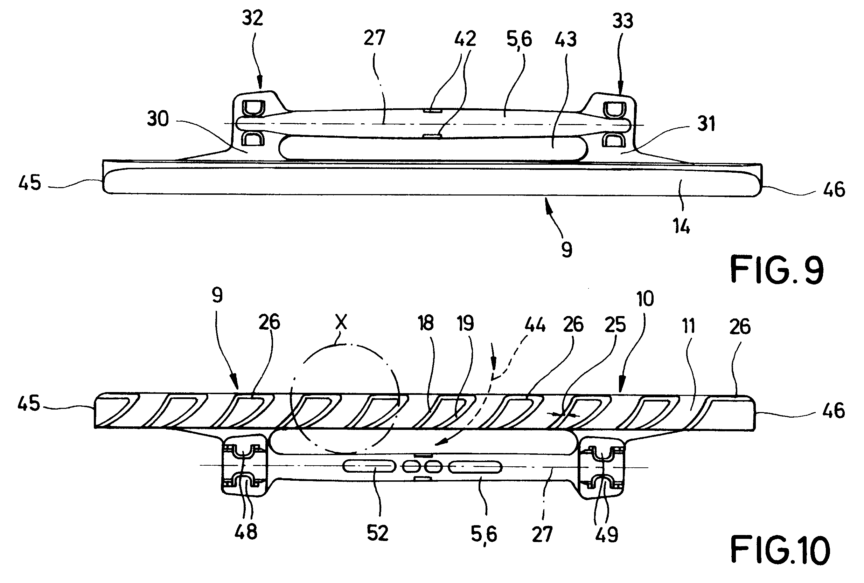

In den Fig. 9 bis 11 ist ein zweites Ausführungsbeispiel für Krallenbügel 5 bzw. 6 und Windleitelement 9 dargestellt, wobei die Ansichten denen der Fig. 3 bis 5 entsprechen.

Die Krallenbügel 5 bzw. 6 weisen analog an ihren Enden 32 bzw. 33 eine Verbindung über Stege 30 bzw. 31 zum Windleitelement 9 auf. Krallenbügel 5 bzw. 6 und Windleitelement 9 erstrecken sich in Längsrichtung 27 und sind im wesentlichen parallel zueinander angeordnet. Zwischen Krallenbügel und Windleitelement ist eine langgestreckte Öffnung 43 angeordnet. Zur lösbaren Befestigung mit den in Fig. 1 bzw. 2 dargestellten Zwischenbügeln 3 und 4 weisen die Krallenbügel 5 bzw. 6 entsprechende Rasteinrichtungen 42 auf.

Das Windleitelement 9 weist eine Windleitfläche 14 auf, die sich zwischen den Enden 45 und 46 des Windleitelements 9 erstreckt.

Nach Fig. 10 sind unterhalb der Windleitfläche 14 eine Anzahl von Führungskanälen 10 mit Eintrittsende 11 und Austrittsende 12 ausgebildet. Diese sind im Vergleich zu dem Ausführungsbeispiel nach Fig. 4 beabstandet zueinander angeordnet. Jeder Führungskanal 10 ist durch eine Seitenwand 18 und eine Seitenwand 19 begrenzt. Diese Seitenwände sind an ihrer dem Eintrittsende 11 zuweisenden Seite mittels einer Vorderwand 26 miteinander verbunden. Die Breite der Vorderwand 26 in Längsrichtung 27 des Windleitelements 9 bestimmt den Abstand zweier benachbarter Führungskanäle 10.

Die Seitenwände 18 bzw. 19 sind mit jeweils im wesentlichen konstanter Wandstärke 25 ausgebildet. In Richtung zum Austrittsende 12 vergrößert sich der Abstand der einen Führungskanal 10 begrenzenden Seitenwände 18 und 19, wodurch die Breite des Eintrittsendes 11 geringer als die Breite des Austrittsendes 12 ist. In Richtung der Enden 45 bzw. 46 nach Fig. 9 erstrecken sich entsprechende Vorderwände 26 von den dem jeweiligen Ende benachbarten Führungskanälen 10. Analog zum Ausführungsbeispiel nach Fig. 4 wird die Strömungsrichtung 44 von auf das Windleitelement 9 einströmenden Wind und/oder Wasser abgelenkt, wobei die im wesentlichen am Eintrittsende 11 senkrecht auf das Windleitelement 9 auftreffende Strömung in Richtung zum Ende 17 nach Fig. 1 bzw. 2 abgelenkt wird.

Gegenüberliegend zur Vorderwand 26 sind die Seitenwände 18 und 19 nicht miteinander verbunden, so daß zwischen den Seitenwänden und der Vorderwand 26 ein aus Richtung des Krallenbügels 5 bzw. 6 zugänglicher Freiraum gebildet ist.

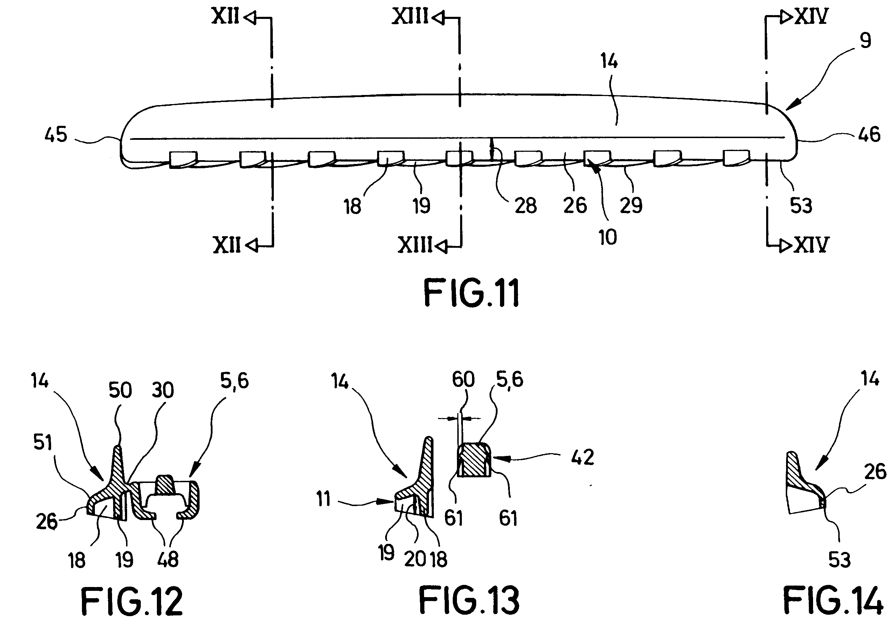

Entsprechend zur Vorderansicht des Windleitelements 9 nach Fig. 11 bilden die Vorderwände 26 einen Teil der Windleitfläche 14. Die Vorderwände 26 erstrecken sich dabei über eine Höhe 28, die im wesentlichen der Höhe der Seitenwände 18 bzw. 19 im Bereich des Eintrittsendes 11 eines jeden Führungskanals 10 entspricht. Untere Enden 53 von Vorderwand 26 und Seitenwänden 18 und 19 liegen dabei im wesentlichen in einer Ebene.

Die Fig. 12 bis 14 stellen entsprechend Schnitte entlang der Linien XII-XII, XIII-XIII und XIV-XIV der Fig. 11 dar.

Nach Fig. 12 erstreckt sich die Windleitfläche 14 von einem vorderen Ende 51 bis zu einem oberen Ende 50 und ist im wesentlichen konkav gekrümmt. Am vorderen Ende 51 bildet die Vorderwand 26 einen Teil der Windleitfläche 14. Die Vorderwand 26 ist im wesentlichen vertikal angeordnet. Auf einer dem Krallenbügel 5 bzw. 6 zuweisenden Rückseite der Windleitfläche 14 ist diese eben und verläuft im wesentlichen vertikal. Zwischen Rückseite der Windleitfläche 14 und Krallenbügel 5 bze. 6 ist der Steg 30 ausgebildet. Dieser weist in etwa mittig eine verminderte Materialstärke auf, wodurch die Elastizität der Verbindung verbessert ist.

Unterhalb der Windleitfläche 14 verläuft die Seitenwand 18, die sich von der Vorderwand 26 bis in Verlängerung der Rückseite der Windleitfläche 14 erstreckt. Die Seitenwand 19 ist entsprechend zu dem Schnitt XII-XII aus Fig. 11 geschnitten dargestellt.

Unterhalb der Krallenbügel 5 bzw. 6 sind die aufeinander zuweisenden Krallen 48 angeordnet. Diese halten in bekannter Weise das in Fig. 1 dargestellte Wischblatt.

In Fig. 13 ist ein Schnitt durch einen Führungskanal 10 in etwa mittig zum Eintrittsende 11 dargestellt. Seitenwände 19 und 18 sind entsprechend zu der Seitenwand 18 aus dem ersten Ausführungsbeispiel nach den Figuren 3 bis 8 mit in Richtung zum Austrittsende zunehmender Höhe 20 ausgebildet. Aufgrund der Krümmung des Führungskanals ist die Seitenwand 18 benachbart zum Austrittsende im Schnitt dargestellt. Im Gegensatz zur Fig. 8 ist in Fig. 13 auch der Krallenbügel 5 bzw. 6 im Schnitt im Bereich der Rasteinrichtung 42 dargestellt.

Die Rasteinrichtung ist durch seitliche Ausnehmungen einer Tiefe 60 des Krallenbügels 5 bzw. 6 gebildet, in der auf beiden Seiten des Krallenbügels Rastnasen 61 nach außen abstehen. Diese sind von entsprechenden, am Zwischenbügel 3 bzw. 4 nach Fig. 1 angeordneten Krallen untergreifbar.

In Fig. 14 ist ein Schnitt benachbart zum Ende 46 aus Fig. 11 dargestellt. Ein von der im wesentlichen ebenen verlaufenden Unterseite der Windleitfläche 14 und einer Horizontalen eingeschlossener Winkel beträgt zwischen 8 und 25°, vorzugsweise zwischen 14 und 18°. Die Unterseite verläuft dabei vom Austrittsende in Richtung Vorderwand 26 nach unten geneigt. Entsprechend erfolgt eine Zunahme der Höhe 20, siehe Fig. 13, der Seitenwände 18 und 19.

In Fig. 15 ist ein Detail X aus Fig. 10 vergrößert dargestellt. Zwei durch Seitenwände 18 und 19 begrenzte Führungskanäle 10 verlaufen vom jeweiligen Eintrittsende 11 zum zugehörigen Austrittsende 12. Die Seitenwände 18 weisen eine im wesentlichen konstante Wandstärke 25 auf und sind mit dem gleichen Krümmungsradius 21 mit zugehörigem Krümmungsmittelpunkt 54 ausgebildet. Die Seitenwände 19 weisen ebenfalls im wesentlichen die gleiche Wandstärke über ihre gesamte Länge zwischen Eintrittsende 11 und Austrittsende 12 auf und sind mit gleichem Krümmungsradius 22 mit zugehörigem Krümmungsmittelpunkt 55 ausgebildet.

Die Seitenwände 18 und 19 sind an ihren dem Eintrittsende 11 zugeordneten Enden durch die Vorderwand 26 miteinander verbunden. An ihren dem Austrittsende 12 zuweisenden hinteren Enden 56 fehlt eine solche Verbindung, so daß ein von Seitenwand 18, Vorderwand 26 und Seitenwand 19 begrenzter und aus Richtung der Austrittsenden 12 zugänglicher Freiraum gebildet ist.

Die Länge der Seitenwände 18 und 19 nimmt von der Windleitfläche 14, siehe Fig. 12, nach unten ab. Demgemäß verläuft das hintere Ende 56, siehe auch Fig. 14, in Richtung zum Eintrittsende 11 nach vorne geneigt, so daß die Seitenwände 18 und 19 an ihren unteren Enden 53 nach Fig. 11 gegenüber ihrem direkt an die Windleitfläche anschließenden oberen Ende eine Verkürzung 62 aufweisen.

In Fig. 16 ist eine Prinzipskizze zur Erläuterung der Wirkungsweise der erfindungsgemäßen Vorrichtung dargestellt.

Das Wischblatt 1 ist an einem Ende eines Wischerarms 16 über den in Fig. 1 bzw. 2 dargestellten Niet 35 verschwenkbar gelagert. Der Wischerarm 16 ist mit seinem anderen Ende mit einer Schwenkvorrichtung 59 zur Hin- und Herbewegung über ein Wischfeld 64 einer Windschutzscheibe 63 verbunden.

In Strömungsrichtung 57 trifft Wind und/oder Wasser auf die Windschutzscheibe 63 auf und wird teilweise in Richtung des Wischblattes 1 abgelenkt. Um eine senkrechte Beaufschlagung des Wischblattes 12 durch Wind und/oder Wasser zu verhindern, werden Wind und/oder Wasser durch die Führungskanäle der Windleitelemente 9, siehe insbesondere Figuren 4 und 5 bzw. 10 und 11, in die Strömungsrichtung 58 abgelenkt. Auf diese Weise strömen Wind und/oder Wasser im wesentlichen parallel zum Wischblatt in Richtung dessen vom Wischerarm 16 fortweisenden Ende 17. Dadurch wird der durch die Wind- und/oder Wasserströmung auf das Wischblatt 1 ausgeübte Druck erheblich reduziert.

## Patentansprüche

1. Wischblatt (1), insbesondere für Kraftfahrzeuge, mit einem wenigstens einen Bügel (2,3,4,5,6) aufweisenden Traggestell (7), einer am Bügel lösbar befestigten Wischleiste (8) und wenigstens einem dem Wischblatt (1) zugeordneten Windleitelement (9), **dadurch gekennzeichnet**, daß das Windleitelement (9) mit einer Anzahl von Führungskanälen (10) ausgebildet ist, welche jeweils ein vorderseitiges Eintrittsende (11) und ein der Wischleiste (8) zuweisendes, rückseitiges Austrittsende (12) aufweisen, wobei Eintritt- und Austrittsende in Längsrichtung (13) des Wischblattes (1) zueinander versetzt sind.

2. Wischblatt nach Anspruch 1 mit einem Haupt-, wenigstens zwei Zwischen- und/oder wenigstens zwei Krallenbügeln (2; 3,4; 5,6) **dadurch gekennzeichnet**, daß das Windleitelement (9) wenigstens einem Krallenbügel (5,6) und/oder Zwischenbügel zugeordnet ist.

3. Wischblatt nach Anspruch 2, **dadurch gekennzeichnet**, daß Windleitelement (9) und Krallenbügel (5,6) einteilig ausgebildet sind.

4. Wischblatt nach wenigstens einem der vorangehenden Ansprüche, **dadurch gekennzeichnet**, daß das Windleitelement (9) oberhalb der Führungskanäle (10) eine Windleitfläche (14) aufweist, welche sich im wesentlichen parallel zur Wischleiste (8) erstreckt.

5. Wischblatt nach wenigstens einem der vorangehenden Ansprüche, **dadurch gekennzeichnet**, daß der Führungskanal (10) auf der der Windleitfläche (14) gegenüberliegenden Seite offen ist.

6. Wischblatt nach wenigstens einem der vorangehenden Ansprüche, **dadurch gekennzeichnet**, daß der Führungskanal (10) einen im wesentlichen U-förmigen Querschnitt aufweist.

7. Wischblatt nach wenigstens einem der vorangehenden Ansprüche, **dadurch gekennzeichnet**, daß der Führungskanal (10) zwischen Eintritts- und Austrittsende (11,12) gekrümmt verläuft.

8. Wischblatt nach wenigstens einem der vorangehenden Ansprüche, welches an einem freien Ende (15) eines hinund herbeweglichen Wischerarms (16) angelenkt ist, **dadurch gekennzeichnet**, daß das Austrittsende (12) gegenüber dem Eintrittsende (11) in Richtung zu einem vom Wischerarm (16) fortweisenden Ende (17) des Wischblattes (1) versetzt ist.

9. Wischblatt nach wenigstens einem der vorangehenden Ansprüche, **dadurch gekennzeichnet**, daß der Führungskanal (10) von zwei Seitenwänden (18;19) begrenzt ist, welche sich zwischen Eintritts- und Austrittsende (11,12) erstrecken.

10. Wischblatt nach wenigstens einem der vorangehenden Ansprüche, **dadurch gekennzeichnet**, daß die Seitenwände (18,19) im wesentlichen senkrecht nach unten von der Windleitfläche (14) abstehen und mit einer in Richtung zum Austrittsende (12) zunehmenden Höhe (20) ausgebildet sind.

11. Wischblatt nach wenigstens einem der vorangehenden Ansprüche, **dadurch gekennzeichnet**, daß die einen Führungskanal (10) begrenzenden Seitenwände (18;19) unterschiedliche Krümmungsradien (21,22) aufweisen.

12. Wischblatt nach wenigstens einem der vorangehenden Ansprüche, **dadurch gekennzeichnet**, daß benachbarte Führungskanäle (10) durch eine Seitenwand (18) getrennt sind, wobei deren den jeweiligen Führungskanal begrenzende Seitenflächen (23,24) unterschiedliche Krümmungsradien (21,22) aufweisen.

13. Wischblatt nach wenigstens einem der vorangehenden Ansprüche, **dadurch gekennzeichnet**, daß die Seitenwand (18) in Richtung zum Eintrittsende (11) mit abnehmender Wandstärke (25) ausgebildet ist.

14. Wischblatt nach wenigstens einem der vorangehenden Ansprüche, **dadurch gekennzeichnet**, daß die Seitenwände (18,19) eines jeden Führungskanals (10) separat ausgebildet sind und nebeneinander angeordnete Seitenwände benachbarter Führungskanäle zumindest auf Seiten der Eintrittsenden (11) durch eine Vorderwand (26) miteinander verbunden sind.

15. Wischblatt nach wenigstens einem der vorangehenden Ansprüche, **dadurch gekennzeichnet**, daß die Vorderwand (26) im wesentlichen parallel zur Längsrichtung (27) des Windleitelements (9) verläuft.

16. Wischblatt nach wenigstens einem der vorangehenden Ansprüche, **dadurch gekennzeichnet**, daß Vorderwand (26) und Seitenwände (18,19) im Bereich des Eintrittsendes (11) die gleiche Höhe (20,28) aufweisen.

17. Wischblatt nach wenigstens einem der vorangehenden Ansprüche, **dadurch gekennzeichnet**, daß die Seitenwand (18,19) an ihrem der offenen Seite des Führungskanals (10) zuweisenden Ende geradlinig nach unten in Richtung Austrittsende verläuft.

18. Wischblatt nach wenigstens einem der vorangehenden Ansprüche, **dadurch gekennzeichnet**, daß Krallenbügel (5,6) und Windleitelement (9) über im wesentlichen horizontal verlaufende Stege (30,31) im Bereich von Enden (32,33) des Krallenbügels miteinander verbunden sind.

19. Wischblatt nach wenigstens einem der vorangehenden Ansprüche, **dadurch gekennzeichnet**, daß die Seitenwand (18,19) in Richtung zur offenen Seite des Führungskanals (10) mit einer abnehmenden Länge zwischen Eintritts- und Austrittsende ausgebildet ist.

20. Wischblatt nach wenigstens einem der vorangehenden Ansprüche, **dadurch gekennzeichnet**, daß das Windleitelement (9) sich in Längsrichtung (27) beidseitig über den Krallenbügel (5,6) hinaus erstreckt, in etwa eine obere Hälfte der Wischleiste (8) abdeckt und sich bis oberhalb des Krallenbügels (5,6) erstreckt.

## Claims

1. Wiper blade (1), in particular for automotive vehicles, comprising a supporting structure (7) including at least one bridge (2, 3, 4, 5, 6), a wiper blade rubber (8) detachably fixed to said bridge, and at least one wind-guiding element (9) allocated to said wiper blade (1), **characterized in** that said wind-guiding element (9) is formed with a plurality of guiding channels (10) which comprise each an inlet end (11) at the front side and an outlet end (12) which is provided at the rear side and faces said wiper blade rubber (8), with inlet and outlet ends being displaced relative to one another in the longitudinal direction (13) of said wiper blade (1).

2. A wiper blade 1 according to claim 1 comprising a main bridge, at least two intermediate bridges and/or at least two link bridges (2; 3, 4; 5, 6), **characterized in** that said wind-guiding element (9) is allocated to at least one link bridge (5, 6) and/or intermediate bridge.

3. Wiper blade according to claim 2, **characterized in** that wind-guiding element (9) and link bridge (5, 6) are integrally formed.

4. Wiper blade according to at least one of the preceding claims, **characterized in** that said wind-guiding element (9) includes a wind-guiding surface (14) above said guiding channels (10), said wind-guiding surface extending substantially in parallel with said wiper blade rubber (8).

5. Wiper blade according to at least one of the preceding claims, **characterized in** that said guiding channel (10) is open at its side opposite to said wind-guiding surface (14).

6. Wiper blade according to at least one of the preceding claims, **characterized in** that said guiding channel (10) has a a substantially U-shaped cross-section.

7. Wiper blade according to at least one of the preceding claims, **characterized in** that said guiding channel (10) takes a curved course between inlet and outlet ends (11, 12).

8. Wiper blade according to at least one of the preceding claims, with said wiper blade being hinged to a free end (15) of a wiper arm (16) that is reciprocatingly movable, **characterized in** that said outlet end (12) is displaced relative to said inlet end (11) towards an end (17) of said wiper blade (1) which faces away from said wiper arm (16).

9. Wiper blade according to at least one of the preceding claims, **characterized in** that said guiding channel (10) is defined by two side walls (18; 19) that extend between inlet and outlet ends (11, 12).

10. Wiper blade according to at least one of the preceding claims, **characterized in** that said side walls (18, 19) project in a substantially vertical direction downwards from said wind-guiding surface (14) and have a height (20) increasing towards said outlet end (12).

11. Wiper blade according to at least one of the preceding claims, **characterized in** that said side walls (18; 19) that define a guiding channel (10) have different radii of curvature (21, 22).

12. Wiper blade according to at least one of the preceding claims, **characterized in** that adjacent guiding channels (10) are separated by a side wall (18), the lateral surfaces (23, 24) thereof which define the respective guiding channel having different radii of curvature (21, 22).

13. Wiper blade according to at least one of the preceding claims, **characterized in** that said side wall (18) has a wall thickness (25) decreasing towards said inlet end (11).

14. Wiper blade according to at least one of the preceding claims, **characterized in** that said side walls (18, 19) of each guiding channel (10) are separately formed and adjacent side walls of neighboring guiding channels are interconnected by a front wall (26) at least at said inlet ends (11).

15. Wiper blade according to at least one of the preceding claims, **characterized in** that said front wall (26) extends substantially in parallel with the longitudinal direction (27) of said wind-guiding element (9).

16. Wiper blade according to at least one of the preceding claims, **characterized in** that front wall (26) and side walls (18, 19) have the same height (20, 28) in the zone of said inlet end (11).

17. Wiper blade according to at least one of the preceding claims, **characterized in** that said side wall (18, 19) extends in a straight line downwards towards said outlet end at its end facing the open side of said guiding channel (10).

18. Wiper blade according to at least one of the preceding claims, **characterized in** that link bridges (5, 6) and wind-guiding element (9) are connected to each other in the area of ends (32, 33) of said link bridge by webs (30, 31) extending substantially in horizontal direction.

19. Wiper blade according to at least one of the preceding claims, **characterized in** that said side wall (18, 19) has a decreasing length between inlet end and outlet end towards the open side of said guiding channel (10).

20. Wiper blade according to at least one of the preceding claims, **characterized in** that said wind-guiding element (9) extends in longitudinal direction (27) at both sides beyond said link bridge (5, 6), covers about an upper half of said wiper blade rubber (8) and extends above said link bridge (5, 6).

## Revendications

1. Balai d'essuie-glace (1), en particulier pour véhicules automobiles, comprenant une structure de support (7) comportant au moins un archet (2, 3, 4, 5, 6), une raclette d'essuie-glace (8) montée de façon démontable sur l'archet, et au moins un élément déflecteur d'air (9) associé au balai d'essuie-glace (1), caractérisé en ce que l'élément déflecteur d'air (9) est configuré avec une série de canaux de guidage (10), oui comportent chacun une extrémité avant d'entrée (11) et une extrémité arrière de sortie (12) orientée en direction de la raclette d'essuie-glace (8), les extrémités d'entrée et de sortie étant décalées l'une par rapport à l'autre dans le sens longitudinal (13) du balai d'essuie-glace.

2. Balai d'essuie-glace selon la revendication 1, comprenant un archet principal, au moins deux archets intermédiaires et/ou au moins deux archets à griffes (2; 3, 4; 5, 6), caractérisé en ce que l'élément déflecteur d'air (9) est associé à au moins un archet à griffes (5, 6) et/ou archet intermédiaire.

3. Balai d'essuie-glace selon la revendication 2, caractérisé en ce que l'élément déflecteur d'air (9) et les archets à griffes (5, 6) sont réalisés d'une seule pièce.

4. Balai d'essuie-glace selon l'une au moins des revendications précédentes, caractérisé en ce que l'élément déflecteur d'air (9) comporte, au-dessus des canaux de guidage (10), une surface de déflecteur d'air (14) qui s'étend essentiellement parallèlement à la raclette d'essuie-glace (8).

5. Balai d'essuie-glace selon l'une au moins des revendications précédentes, caractérisé en ce que le canal de guidage (10) est ouvert du côté opposé à la surface de déflecteur d'air (14).

6. Balai d'essuie-glace selon l'une au moins des revendications précédentes, caractérisé en ce que le canal de guidage (10) présente une section transversale essentiellement en forme de U.

7. Balai d'essuie-glace selon l'une au moins des revendications précédentes, caractérisé en ce que le canal de guidage (10) s'étend en courbe entre les extrémités d'entrée et de sortie (11, 12).

8. Balai d'essuie-glace selon l'une au moins des revendications précédentes, articulé sur l'extrémité libre (15) d'un bras d'essuie-glace (16) mobile en va-et-vient, caractérisé en ce que l'extrémité de sortie (12) est décalée par rapport à l'extrémité d'entrée (11) en direction d'une extrémité (17) du balai d'essuie-glace (1) qui est orientée vers l'opposé du bras d'essuie-glace (16).

9. Balai d'essuie-glace selon l'une au moins des revendications précédentes, caractérisé en ce que le canal de guidage (10) est délimité par deux parois latérales (18; 19) qui s'étendent entre les extrémités d'entrée et de sortie (11, 12).

10. Balai d'essuie-glace selon l'une au moins des revendications précédentes, caractérisé en ce que les parois latérales (18, 19) se projettent depuis la surface de déflecteur d'air (14) essentiellement verticalement vers le bas et sont configurées de façon à présenter une hauteur (20) qui croît en direction de l'extrémité de sortie (12).

11. Balai d'essuie-glace selon l'une au moins des revendications précédentes, caractérisé en ce que les parois latérales (18, 19) délimitant un canal de guidage (10) présentent des rayons de courbure (21, 22) différents.

12. Balai d'essuie-glace selon l'une au moins des revendications précédentes, caractérisé en ce que des canaux de guidage (10) contigus sont séparés l'un de l'autre par une paroi latérale (18), leurs faces latérales (23, 24) délimitant le canal de guidage correspondant présentant des rayons de courbure (21, 22) différents.

13. Balai d'essuie-glace selon l'une au moins des revendications précédentes, caractérisé en ce que la paroi latérale (18) est configurée de façon que l'épaisseur (25) de la paroi diminue en direction de l'extrémité d'entrée (11).

14. Balai d'essuie-glace selon l'une au moins des revendications précédentes, caractérisé en ce que les parois latérales (18, 19) de chaque canal de guidage (10) sont configurées séparément les unes des autres, et que des parois latérales juxtaposées de canaux de guidage contigus sont jointes l'une à l'autre par une paroi frontale (26) au moins du côté des extrémités d'entrée (11).

15. Balai d'essuie-glace selon l'une au moins des revendications précédentes, caractérisé en ce que la paroi frontale (26) s'étend essentiellement parallèlement au sens longitudinal (27) de l'élément déflecteur d'air (9).

16. Balai d'essuie-glace selon l'une au moins des revendications précédentes, caractérisé en ce que la paroi frontale (26) et les parois latérales (18, 19) présentent, au niveau de l'extrémité d'entrée (11), la même hauteur (20, 28).

17. Balai d'essuie-glace selon l'une au moins des revendications précédentes, caractérisé en ce qu'au niveau de son extrémité orientée face au côté ouvert du canal de guidage (10), la paroi latérale (18, 19) s'étend en ligne droite vers le bas, en direction de l'extrémité de sortie.

18. Balai d'essuie-glace selon l'une au moins des revendications précédentes, caractérisé en ce que les archets à griffes (5, 6) et l'élément déflecteur d'air (9) sont reliés les uns aux autres par l'intermédiaire de traverses (30, 31) s'étendant essentiellement horizontalement, dans la révision des extrémités (32, 33) de l'archet à griffes.

19. Balai d'essuie-glace selon l'une au moins des revendications précédentes, caractérisé en ce que la paroi latérale (18, 19) est configurée de manière que sa longueur diminue en direction du côté ouvert du canal de guidage (10), entre les extrémités d'entrée et de sortie.

20. Balai d'essuie-glace selon l'une au moins des revendications précédentes, caractérisé en ce que l'élément déflecteur d'air (9) s'étend, dans le sens longitudinal (27), au-delà des archets à griffes (5, 6) des deux côtés de ceux-ci, recouvre à peu près une moitié supérieure de la raclette d'essuie-glace (8), et s'étend jusqu'au-dessus de l'archet à griffes (5, 6).
